# EUROPEAN PATENT APPLICATION

(11) **EP 2 522 974 A2**
(43) Date of publication of application: **14.11.2012**
(21) Application number: 12167343.8
(22) Date of filing: 09.05.2012
(51) Int. Cl.: G01L 27/00, G01D 3/10

(54) **Signal processing during fault conditions**

(30) Priority: 10.05.2011 US 201113104077
(71) Applicant: Sensata Technologies, Inc., Attleboro, MA 02703 (US)
(72) Inventor: Corkum, David L., Attleboro, MA Massachusetts 02703 (US)
(74) Representative: Legg, Cyrus James Grahame

(57) **Abstract**

A system is configured to monitor a received signal. In response to detecting a fault condition associated with the received signal, the system sets a fault status indicator to indicate occurrence of the detected fault condition. The system sets a state of the fault status indicator for at least a predetermined amount of time to indicate occurrence of the detected fault condition. Subsequent to setting the fault status indicator for at least the predetermined amount of time to indicate the occurrence of the detected fault condition, the system monitors integrity of the signal again. After the predetermined amount of time, in response to detecting that there is no longer a fault associated with the monitored signal, the system modifies the fault status indicator to indicate absence of the fault condition.

## Description

### BACKGROUND

Conventional sensor devices are often used to measure environmental conditions. Via signal information generated by the sensor devices, it is possible to electrically monitor environment conditions and perform or refrain from performing one or more functions.

One type of conventional sensor device is a pressure transducer. By way of example, in general, a pressure transducer produces an output signal such as a voltage that varies within an operational range depending on a current pressure condition detected by the sensor device. If a detected pressure in a monitored region is relatively high, the pressure transducer will produce an output signal to indicate the relatively high pressure. If a current pressure as detected by the sensor device is relatively low in the monitored region, the pressure transducer will adjust the output signal to indicate the relatively low pressure.

In certain cases, a magnitude of the output signal produced by the pressure transducer proportionally changes (e.g., via amplitude adjustments, frequency adjustments, etc.) depending on a corresponding level of detected pressure. Accordingly, a conventional monitoring system can determine a current pressure condition of a monitored region merely by converting the output signal produced by the sensor device into a corresponding pressure value.

Transducers are susceptible to failure. Failures can be caused by a number of different factors and can produce erroneous output signals (i. e., signals not consistent with an expected transfer function). When possible and appropriate, sensors are designed to detect and report failures. Often a range of output signals is designated for fault reporting a so called fault band.

Transducers producing an analog voltage output are often interfaced to a receiving 'system' low pass filter. The 'system' low pass filter is primarily used to reduce sensor output signal noise prior to signal sampling, but must also provide sufficient response bandwidth to maintain observability of signal changes critical to the application.

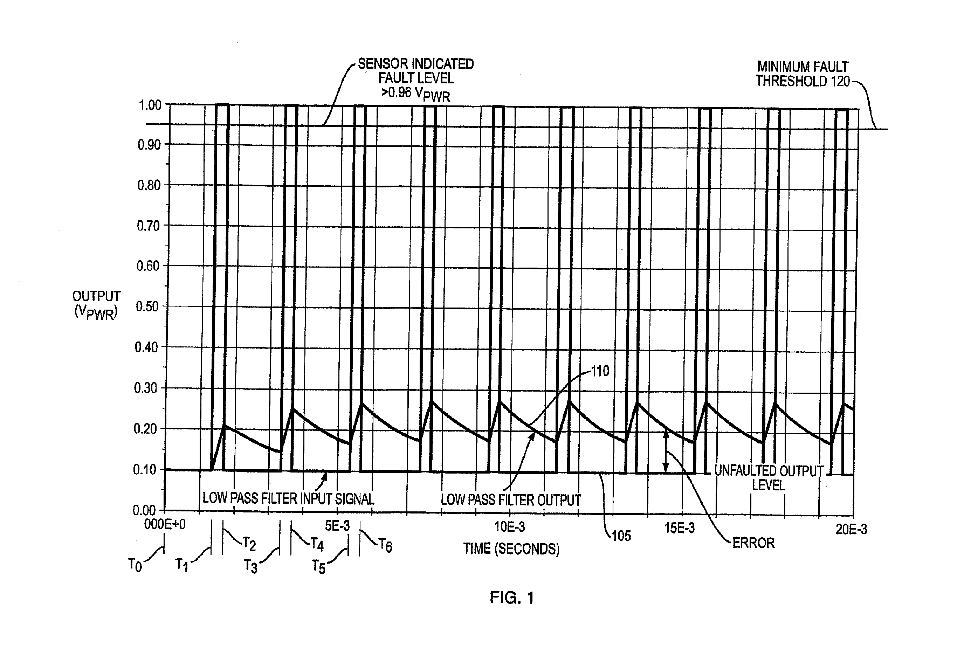

While prior art has been disclosed to avoid nuisance fault reporting (e. g., deglitch circuits), it is possible for faults to be reported in a manner that can produce erroneous in-range signals following low pass filtering for certain fault manifestations - specifically repetitious faults that persist long enough to satisfy deglitch circuits as 'validated faults' but sufficiently short periods of time compared to the response of a receiving system low pass filter as shown in FIG 1. In other words, during a repetitiously reported failure condition, a magnitude of the output signal may not accurately reflect a current environmental condition or actual reported fault status. Sampling of the output signal during repetitious reporting of the failure can lead to undesirable or severe consequences if the system assumes that the erroneous measurement data is valid.

Assume in the example as shown in FIG. 1 that the output of a respective transducer is between 0 and 1.0 times Vpwr (a voltage of power supplied to the sensor). Assume further that the example sensor is configured to indicate an error condition when the output 110 is above 0.96 * Vpwr. Thus, the general operational range of the sensor is between 0 and 0.96 *Vpwr to indicate a properly working sensor device. Generation of a value between 0.96 *Vpwr and Vpwr (e.g., above the minimum fault threshold 120) indicates a failure associated with the sensor.

In the example as shown in FIG. 1, the sensor fails intermittently. That is, over time, the sensor produces an accurate voltage output (e.g., input 105) representative of a monitored environment between time T0 and T1, between time T2 and T3, etc. However, due to a failure, the sensor produces an erroneous output value (e.g., input 110 to low pass filter) between time T1 and T2, between time T3 and T4, etc. As can be seen in FIG 1, the signal (105) combined with the behavior of a specific low pass filter, produces an erroneous value (110) that produces a saw-toothed shaped output voltage value of approximately 0.22 * Vpwr as shown in FIG 1. That is, instead of producing a fault signal or a value of 0.1 * Vpwr, which would accurately reflect the environment being monitored, the output 110 of the low pass filter produces a value that vacillates around the value of approximately 0.22 *Vpwr during the error condition. Because the output 110 of the low pass filter never goes higher than 0.96 * Vpwr, a system receiving the output of the low pass filter would not be made aware of the intermittent failure of the transducer between times T1 and T2, between time T3 and T4, etc. The system receiving the output of the low pass filter, thus, may operate on faulty data. That is, the system may detect the voltage of the sensor as being approximately 0.2 *Vpwr and not detect the error condition when sampled.

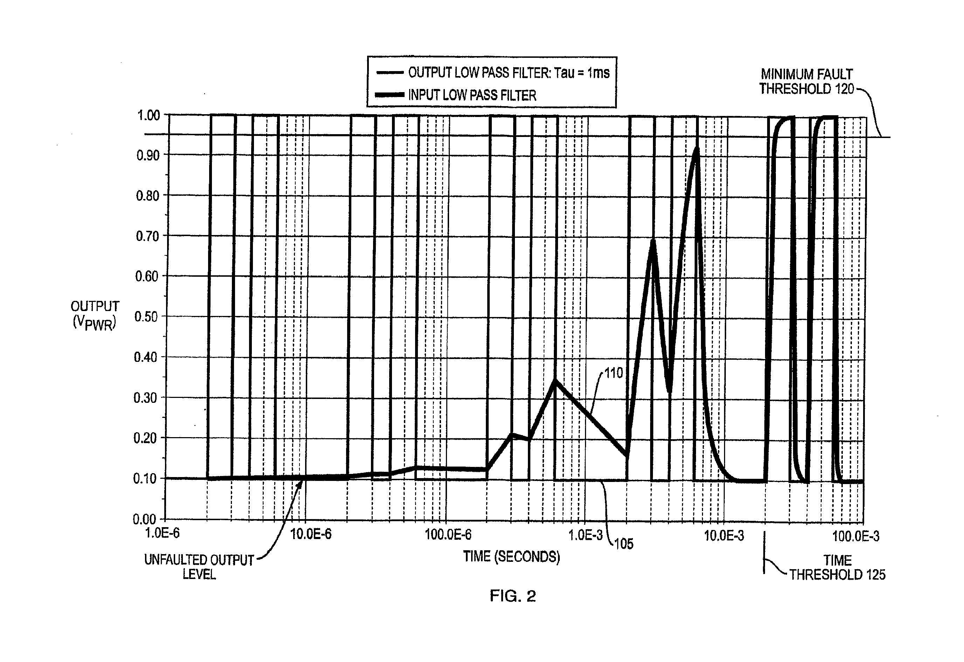

FIG. 2 is an example diagram illustrating a logarithmic scale of time indicating a range of operating conditions in which the intermittent failure of a transducer is not detected by a downstream resource monitoring the output of a low pass filter. As shown, when a duration of the intermittent failure is below 11 milliseconds, a downstream resource monitoring the output of the low pass filter is not aware of the error because the output of the low pass filter stays within the operational range between 0.0 * Vpwr and 0.96 * Vpwr. That is, the faulty output of the low pass filter appears to be an accurate signal to the system sampling the output of the low pass filter even though there is an error.

### BRIEF DESCRIPTION

Embodiments herein deviate with respect to conventional systems for processing signals. For example, in contrast to conventional systems, certain embodiments herein are directed to providing a higher likelihood that a respective system will be notified of a fault condition.

For example, one embodiment herein includes a system configured to monitor a received signal. In response to detecting a fault condition associated with the received signal, the system sets a fault status indicator to indicate occurrence of the detected fault condition. The system latches or sets a state of the fault status indicator for at least a predetermined amount of time to indicate the occurrence of the detected fault condition. Subsequent to setting the fault status indicator for at least the predetermined amount of time to indicate the occurrence of the detected fault condition the system monitors the integrity of the signal again. In one embodiment, in response to detecting that there is no longer a fault associated with the monitored signal after the predetermined amount of time, the system modifies the fault status indicator to indicate absence of the fault condition.

In accordance with further embodiments, the predetermined amount of time as discussed above is based on a time constant, tau, of a low pass filter through which the received signal is passed to a downstream resource. In one embodiment, the predetermined time amount of time is greater than 4 times the time constant, tau. In a more specific embodiment, the minimum duration of time to latch a fault condition (once it is verified as being valid) is a 4.6 * tau; where tau is the time constant of the low pass filter through which the sensor signal passes to a downstream device.

In accordance with further embodiments, that the minimum duration is dependent on many parameters (e. g., system sampling periodicity, output signal range tolerances, etc.). The minimum time duration of latching a fault condition can be selected to ensure that a downstream device detects a valid fault signal.

The system according to embodiments herein can include an output signal generator. The output signal generator generates an output signal based on the received signal and fault condition. For example, the output signal generator varies or adjusts a magnitude of the output signal based on the received signal. For example, the output signal generator transmits the output signal to a downstream resource through a low pass filter. During a time when the fault status indicator indicates the detected fault condition for at least the predetermined amount of time, the output signal generator sets a magnitude of the output signal to be within a fault band (e.g., voltage range). The downstream resource is ensured of being notified of the fault condition because output signal generator sets the input of the low pass filter to a fault band for at least the predetermined amount of time. In one embodiment, the downstream resource samples the output signal at a high enough rate to detect occurrence of the error condition.

In accordance with further embodiments, setting the magnitude of the output signal can include setting the magnitude of the output signal to be in the fault band for at least 4 times longer than a time constant of the low pass filter to notify the downstream resource of the detected fault condition.

In yet further embodiments, as mentioned above, the system can input the received signal (or a processed version of the received signal from a source such as a transducer) to a low pass filter circuit. An output of the low pass filter circuit can be configured to output a low pass filtered version of the signal to a downstream resource. Also, as mentioned above, the system modifies a magnitude of the signal inputted to the low pass filter circuit to be within a fault voltage range for at least the predetermined amount of time to ensure notification of the downstream resource of the detected fault condition. In other words, even though the actual error in the output voltage of the sensor may occur for less than the predetermined amount of time, the system modifies the magnitude of the signal inputted to the low pass filter to be within the fault range for at least the predetermined amount of time so that a magnitude of the output of the low pass filter at least momentarily indicates that the fault condition occurred.

In one embodiment, as mentioned, a sensor device can generate the signal received by the system. The fault voltage range can be configured to fall outside a nominal voltage range outputted by the sensor device.

In accordance with another embodiment, setting of the fault status indicator to indicate the detected fault condition can include activating a timer to keep track of time. The system maintains a state of the fault status indicator to indicate the detected fault for at least the predetermined amount of time based on the time tracked by the timer.

The system can include a fault detection circuit that applies a set of rules to determine whether a fault condition occurs. In one embodiment, the system applies a set of rules to verify integrity of the received signal. Other embodiments can include monitoring attributes of other signals that may indicate a level of integrity associated with the received signal. Thereafter, assuming the signal verification fails indicating there is a fault condition, the system provides notification of the fault condition to a downstream resource.

In yet further embodiments, the system produces the signal inputted to the low pass filter by setting a magnitude of the output signal to be substantially equal to a magnitude of the received signal in the absence of the fault condition. As previously discussed, the magnitude of the received signal can varying depending on an environmental condition detected by a sensor device that produces the received signal. During the fault condition, the system adjusts the magnitude of the output signal to be substantially different than the magnitude of the received signal at least for the predetermined amount of time to ensure notification of the fault condition through a filter to a downstream resource.

In accordance with further embodiments, the system adjusts the magnitude of the output signal to be substantially different than the magnitude of the received signal for at least a portion of the predetermined amount of time even though the fault condition associated with the received signal terminates before expiration of the predetermined amount of time. In other words, during the predetermined amount of time or latching of a fault condition, the fault condition may no longer exist. At such time, the system continues to set the magnitude of the output signal inputted to the low pass filter to be in the fault range even though the received signal is accurate again. Thus, the received signal may be of one magnitude while an output signal produced by the system may be of a different magnitude (i.e., within the fault band).

In summary, embodiments herein avoid erroneous interpretations of a signal in systems that implement a low pass filter. For example, a sensor fault signal is latched for at least the predetermined amount of time to ensure that a downstream system monitoring an output of a low pass filter detects the fault condition.

These and other embodiment variations are discussed in more detail below.

As mentioned above, note that embodiments herein can include a configuration of one or more computerized devices, hardware processor devices, or the like to carry out and/or support any or all of the method operations disclosed herein. In other words, one or more computerized devices, processors, digital signal processors, etc., can be programmed and/or configured to operate as explained herein to carry out different embodiments as discussed herein.

Yet other embodiments herein include software programs to perform the steps and operations summarized above and disclosed in detail below. One such embodiment comprises a computer-readable, hardware storage resource including computer program logic, instructions, etc., encoded thereon that, when performed in a computerized device having a processor and corresponding memory, programs and/or causes the processor to perform any of the operations disclosed herein. Such arrangements can be provided as software, firmware, code, and/or other data (e.g., data structures) arranged or encoded on a computer readable medium such as an optical medium (e.g., CD-ROM), floppy or hard disk or other a medium such as firmware or microcode in one or more ROM or RAM or PROM chips or as an Application Specific Integrated Circuit (ASIC). The software or firmware or other such configurations can be installed onto a computerized device to cause the computerized device to perform the techniques explained herein.

Accordingly, one particular embodiment of the present disclosure is directed to a computer program product that includes a computer-readable hardware storage medium having instructions stored thereon for carrying out embodiments herein. For example, in one embodiment, the instructions, when carried out by a processor of a respective computer device, cause the processor to: monitoring a received signal; in response to detecting a fault condition associated with the received signal, monitoring a received signal; setting a state of the fault status indicator for at least a predetermined amount of time to indicate occurrence of the detected fault condition; and subsequent to setting the fault status indicator for at least the predetermined amount of time to indicate the occurrence of the detected fault condition: in response to detecting that there is no longer a fault associated with the received signal, modifying the fault status indicator to indicate absence of the fault condition.

In accordance with another embodiment, instructions, when carried out by a processor of a respective computer device, cause the processor to: receive a signal, a magnitude of the received signal varying depending on a environmental condition detected by a sensor device that produces the received signal; process the received signal to produce an output signal; transmit the output signal to a remote resource to notify the remote resource of the environmental condition detected by the sensor device; and in response to detecting occurrence of a fault condition associated with the received signal, modifying a magnitude of the transmitted output signal to be substantially different than the received signal to notify the remote resource of the fault condition.

Further, in a first aspect the invention provides a method comprising:
monitoring a received signal;
in response to detecting a fault condition associated with the received signal, setting a fault status indicator to indicate the detected fault condition;
setting a state of the fault status indicator for at least a predetermined amount of time to indicate occurrence of the detected fault condition; and
subsequent to setting the fault status indicator for at least the predetermined amount of time to indicate the occurrence of the detected fault condition:
   in response to detecting that there is no longer a fault associated with the received signal, modifying the fault status indicator to indicate absence of the fault condition.

The predetermined amount of time is preferably greater than 4 times tau, wherein tau is a time constant of a low pass filter through which the fault status indicator passes.

The method may further comprise:
generating an output signal;
varying a magnitude of the output signal based on a magnitude of the received signal;
transmitting the output signal to a downstream resource through a low pass filter; and
during a time when the fault status indicator indicates the detected fault condition for at least the predetermined amount of time:
   setting a magnitude of the output signal to be within a fault band.

The setting the magnitude of the output signal may further comprise:
setting the magnitude of the output signal to be in the fault band for at least 4 times longer than a time constant of the low pass filter to notify the downstream resource of the detected fault condition.

The method may further comprise:
inputting the received signal to a low pass filter circuit, an output of the low pass filter circuit configured to output a low pass filtered version of the received signal to a downstream resource; and
modifying a magnitude of the signal inputted to the low pass filter circuit to be within a fault voltage range for at least the predetermined amount of time to ensure notification of the downstream resource of the detected fault condition.

The method may be where a sensor device generates the received signal; and
where the fault voltage range falls outside a nominal voltage range outputted by the sensor device.

The setting the fault status indicator to indicate the detected fault condition may include:
activating a timer to keep track of time;
maintaining the state of the fault status indicator to indicate the detected fault for at least the predetermined amount of time based on the time tracked by the timer.

The monitoring the received signal may further comprise:
applying a set of rules to verify the received signal; and
providing notification of the fault condition in response to detecting that the received signal violates at least one rule in the set of rules.

The method may further comprise:
producing, based on the received signal, an output signal to transmit to a low pass filter;
setting a magnitude of the output signal to be substantially equal to a magnitude of the received signal in the absence of the fault condition, the magnitude of the received signal varying depending on an environmental condition detected by a sensor device that produces the received signal; and
adjusting the magnitude of the output signal to be substantially different than the magnitude of the received signal at least for the predetermined amount of time.

The method may further comprise:
adjusting the magnitude of the output signal to be substantially different than the magnitude of the received signal for at least the predetermined amount of time even though the fault condition associated with the received signal terminates before expiration of the predetermined amount of time.

In a second aspect of the invention there is provided a method comprising:
receiving a signal, a magnitude of the received signal varying depending on a environmental condition detected by a sensor device that produces the received signal;
processing the received signal to produce an output signal; transmitting the output signal to a remote resource to notify the remote resource of the environmental condition detected by the sensor device; and
in response to detecting occurrence of a fault condition associated with the received signal, modifying a magnitude of the transmitted output signal to be substantially different than the received signal to notify the remote resource of the fault condition.

The transmitting the output signal may include:
for a first time duration prior to occurrence of the fault condition:
   setting the magnitude of the output signal to be substantially equal to a magnitude of the received signal;
   transmitting the output signal to the remote resource to notify the remote resource of the environmental condition detected by the sensor device; and
   wherein modifying the magnitude of the output signal includes:
   for a second time duration, in response to detecting the fault condition:
      setting the magnitude of the output signal to a value that is substantially different than the magnitude of the received signal.

The modifying the magnitude of the output signal may include setting a magnitude of the output signal for greater than a threshold time value to enable detection of the failure condition by the remote resource.

The modifying the magnitude of the output signal may include adjusting the magnitude of the output signal for more than a minimum time duration value and at least as long as the fault condition persists.

The method may further comprise:
subsequent to modifying the magnitude of the transmitted output signal to a level indicating the fault condition:
   in response to detecting that the fault condition no longer exists in the control system, setting the magnitude of the transmitted output signal to be substantially equal to the received signal.

The modifying the magnitude of the output signal may include adjusting the magnitude of the transmitted output signal to be substantially different than the magnitude of the received signal for a longer duration than during the occurrence of the fault condition.

The present invention also provides a computer-readable storage hardware having instructions stored thereon, the instructions, when carried out by a processing device, causes the processing device to perform operations of:
monitoring a received signal;
in response to detecting a fault condition associated with the received signal, setting a fault status indicator to indicate the detected fault condition;
setting a state of the fault status indicator for at least a predetermined amount of time to indicate occurrence of the detected fault condition; and
subsequent to setting the fault status indicator for at least the predetermined amount of time to indicate the occurrence of the detected fault condition:
   in response to detecting that there is no longer a fault associated with the monitored signal, modifying the fault status indicator to indicate absence of the fault condition.

The present invention further provides a system comprising:
a processor circuit;
a storage unit that stores instructions associated with an application executed by the processor device; and
an interconnect coupling the processor and the storage unit, the processor circuit configured to execute the application and perform operations of:
   monitoring a received signal;
   in response to detecting a fault condition associated with the received signal, setting a fault status indicator to indicate the detected fault condition;
   setting a state of the fault status indicator for at least a predetermined amount of time to indicate occurrence of the detected fault condition; and
   subsequent to setting the fault status indicator for at least the predetermined amount of time to indicate the occurrence of the detected fault condition:
      in response to detecting that there is no longer a fault associated with the monitored signal, modifying the fault status indicator to indicate absence of the fault condition.

The present invention also provides a system comprising:
fault detection circuitry to monitor a received signal; and
a latch circuit to:
   set a fault status indicator to indicate a fault condition associated with the received signal as detected by the fault detection circuitry;
   set a state of the fault status indicator for at least a predetermined amount of time to indicate occurrence of the fault condition; and
   subsequent to setting the fault status indicator for at least the predetermined amount of time to indicate the occurrence of the detected fault condition:
      in response to detecting that there is no longer a fault associated with the monitored signal, modify the fault status indicator to indicate absence of the fault condition.

The system may further comprise:
an output signal generator to generate an output signal, the output signal generator varying a magnitude of the output signal to substantially track a magnitude of the received signal prior to the fault condition; and
the output signal generator setting a magnitude of the output signal to be within a fault band for at least the predetermined amount of time when the fault status indicator indicates the detected fault condition.

The output signal generator may adjust the magnitude of the output signal to be substantially different than the magnitude of the received signal for a portion of the predetermined amount of time when the fault status indicator indicates the fault condition.

The ordering of the steps has been added for clarity sake. Note that these steps can be performed in any suitable order.

Other embodiments of the present disclosure include software programs, firmware, and/or respective hardware to perform any of the method embodiment steps and operations summarized above and disclosed in detail below.

Also, it is to be understood that the system, method, apparatus, instructions on computer readable storage media, etc., as discussed herein can be embodied strictly as a software program, as firmware, or as software. The embodiments herein also can be embodied as a hybrid of software, firmware, and/or hardware.

As discussed above, techniques herein are well suited for use in software, firmware, and/or hardware applications that process signals. However, it should be noted that embodiments herein are not limited to use in such applications and that the techniques discussed herein are well suited for other applications as well.

Additionally, although each of the different features, techniques, configurations, etc., herein may be discussed in different places of this disclosure, it is intended that each of the concepts can be executed independently of each other or in combination with each other. Accordingly, the one or more present inventions, embodiments, etc., as described herein can be embodied and viewed in many different ways.

Also, note that this preliminary discussion of embodiments herein does not specify every embodiment and/or incrementally novel aspect of the present disclosure or claimed invention(s). Instead, this brief description only presents general embodiments and corresponding points of novelty over conventional techniques. For additional details and/or possible perspectives (permutations) of the invention(s), the reader is directed to the Detailed Description section and corresponding figures of the present disclosure as further discussed below.

### BRIEF DESCRIPTION OF THE DRAWINGS

The foregoing and other objects, features, and advantages of the invention will be apparent from the following more particular description of preferred embodiments herein, as illustrated in the accompanying drawings in which like reference characters refer to the same parts throughout the different views. The drawings are not necessarily to scale, with emphasis instead being placed upon illustrating the embodiments, principles, concepts, etc.
FIG. 1 is an example timing diagram illustrating occurrence of a fault condition in the prior art.
FIG. 2 is an example timing diagram illustrating a range of fault reporting periods capable to produce erroneous signals for a specific fault reporting pattern and low pass filter.
FIG. 3 is an example diagram illustrating a system according to embodiments herein.
FIG. 4 is an example diagram illustrating a nominal output signal range of a senor device and an example of a fault band according to embodiments herein.
FIG. 5 is an example diagram illustrating generation of a signal according to embodiments herein.
FIG. 6 is a diagram illustrating an example computer architecture for executing computer code, software, applications, logic, etc., according to embodiments herein.
FIG. 7 is a flowchart illustrating an example method of processing a received signal and producing an output voltage according to embodiments herein.
FIG. 8 is a flowchart illustrating an example method of processing a received signal and producing an output voltage according to embodiments herein.

### DETAILED DESCRIPTION

According to embodiments herein, a system is configured to monitor a received signal. In response to detecting a fault condition associated with the received signal, the system sets a fault status indicator to indicate occurrence of the detected fault condition. The system sets a state of the fault status indicator for at least a predetermined amount of time to indicate occurrence of the detected fault condition. This ensures that a downstream resource detects that a failure occurs. Subsequent to setting the fault status indicator for at least the predetermined amount of time to indicate the occurrence of the detected fault condition, the system monitors integrity of the signal again. After the predetermined amount of time, in response to detecting that there is no longer a fault associated with the monitored signal, the system modifies the fault status indicator to indicate absence of the fault condition.

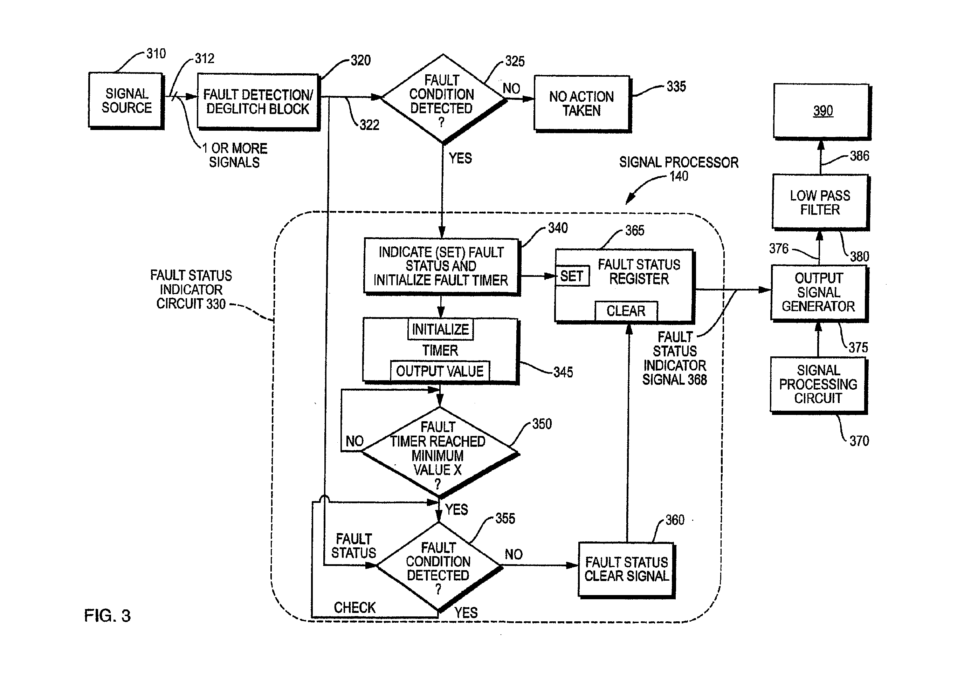

FIG. 3 is an example diagram illustrating a system/flowchart according to embodiments herein.

As shown, the signal source 310 such as a sensor device generates signal 312. Note that signal 312 can represent any type of signal information generated by the signal source 310. By way of a non-limiting example, the magnitude, frequency, etc., of the signal 312 produced by signal source varies depending on a parameter such as environmental conditions sensed by the signal source 310.

Note that signal 312 can represent any suitable parameter such as temperature, pressure, etc.

During operation, block 320 of signal processor 140 deglitches signal 312 to produce signal 322. Deglitching can include any suitable method as known in the art.

Block 325 monitors signal 322 for errors. An error can be a condition such as that the signal 322 falls outside of a desired operational range. If no error condition is detected by block 325, no action is taken as indicated by block 335. Conversely, in response to detecting an error condition associated with signal 322, block 325 notifies block 340 of the detected error condition.

Upon receiving a notification of the occurrence of a failure condition from block 325, block 340 sets the fault status register 365. Setting the fault status register 365 causes the fault status indicator signal 368 to indicate the detected error condition.

Also, in response to receiving a notification of the occurrence of a failure condition from block 325, block 340 initializes timer 345. Block 350 monitors the timer 345 to detect when the timer reaches a minimum value X. Block 350 provides notification to block 355 when the minimum time X (e.g., a predetermined amount of time) has elapsed since detecting the error condition. For example, in response to detecting that the minimum amount of time X has passed since detecting the error condition, block 350 notifies block 355 of the condition.

Block 355 repeatedly monitors signal 322 to detect when the error condition associated with signal 322 has been terminated. Upon detecting that the error condition no longer exists (i.e., the signal source 310 and/or signal 322 are now healthy), the block 355 generates fault status clear signal 360. Block 355 transmits the fault status clear signal 360 to the CLEAR input of fault status register 365. Generation of the fault status clear signal 360 causes the fault status register 365 to modify the fault status indicator signal 368 and discontinue flagging the previously detected fault condition. In other words, receipt of the fault status clear signal 360 causes the fault status indicator signal 368 to discontinue flagging occurrence of the error condition. Accordingly, the fault status register 365 in fault status indicator circuit 330 generates the error for at least the minimum time X in response to detection of the error condition.

Signal processing circuit 370 transmits the signal 322 or substantially similar signal to output signal generator 375. Generally, output signal generator 375 produces output signal 376 to be the same or substantially similar to the signal 322 when there is no error condition detected (e.g., when fault status indicator signal 365 is cleared indicating no error). However, when fault status indicator signal 368 indicates an error condition based on being set, the output signal generator 375 sets the signal 376 to a value within a fault band. In one embodiment, the output signal generator 375 sets the signal 376 to be in the fault band during the time that the fault status indicator signal 368 indicates the error condition.

Low pass filter 380 receives the signal 376 generated by output signal generator 375. The low pass filter can be configured to filter according to any suitable frequency. As its name suggests, low pass filter 380 filters higher frequency components but allows lower frequencies of signal 376 to pass downstream to resource 390 as signal 386.

Note that the fault status indicator circuit 330, signal processor 140, and method of signal processing as disclosed with respect to FIG. 3 can be implemented in a number of different ways. For example, the fault status indicator circuit 330 can be implemented via hardware circuits. In one embodiment, block 340 can be realized with various hardware implementations such as two logic buffers, each receiving an input from "Yes" path outputted by block 325. A first logic buffer output is connected to the SET input of fault status register 365. A second logic buffer output is connected to the "INITIALIZE" input of block 345.

Block 345 can be realized as a counter circuit such as a serial connection of T flip-flops. In one embodiment, the output value of the flip-flops would correspond to a T flip-flop output state consistent with a limiting time value (e.g., a most significant bit or carry circuit).

Block 350 can be implemented using a logic buffer having an input from block 340 and having an output to block 355.

Block 355 can be realized with two NAND gates and a logic inverter. For example, the "YES" output of block 355 can be connected to the input of the logic inverter, the output of the logic inverter can be connected to a first input of a logic NAND gate; the output of block 320 can be connected to a second input of the logic NAND gate and the output of the logic NAND gate can be connected to block 360.

Fault status register 365 can be implemented using an SR flip flop having a SET input and a CLEAR input as shown.

In accordance with another embodiment, the techniques discussed in FIG. 3 can be implemented via software such as instructions, logic, executable code, etc.

In accordance with yet another embodiment, the techniques discussed in FIG. 3 can be implemented via firmware

In accordance with yet further embodiments, the techniques discussed in FIG. 3 can be implemented via a combination of hardware, software, and/or firmware.

Thus, according to embodiments herein, signal processor 140 is configured to monitor the signal 312 produced by signal source 310. In response to detecting a fault condition associated with the signal 312 and/or signal 322, the fault status indicator circuit 330 of signal processor 140 sets a fault status indicator signal 368 to indicate occurrence of the detected fault condition. Based on fault status indicator signal 368 received from fault status register 365, the fault status indicator circuit 330 latches or sets a state of the fault status indicator signal 368 for at least a predetermined amount of time to indicate the occurrence of the detected fault condition.

Subsequent to setting the fault status indicator signal 368 for at least the predetermined amount of time to indicate the occurrence of the detected fault condition associated with the signal 312 produces by signal source 310, the fault status indicator circuit 368 monitors the integrity of the signal 322 again. In one embodiment, in response to detecting that there is no longer a fault associated with the monitored signal 322 after the predetermined amount of time, the fault status indicator circuit 368 modifies the fault status indicator signal 368 to indicate absence of the fault condition.

In accordance with further embodiments, the predetermined time amount of time (e.g., minimum time value X) of setting the fault status indicator signal 368 can be based on a time constant (e.g., causing a - 3 dB signal attenuation), tau, of a low pass filter 380 through which the sensor signal is passed to a downstream resource 390.

In one embodiment, the predetermined time amount of time is greater than 4 times the time constant, tau. In a more specific embodiment, the minimum duration of time to latch a fault condition (once it is verified as being valid) is a 4.6 * tau; where tau is the time constant of the low pass filter 380.

In accordance with further embodiments, note that the minimum duration of latching the fault status indicator signal 368 to indicate the fault condition can be dependent on many parameters (e. g., system sampling periodicity, output signal range tolerances, etc.). The minimum time duration X of latching a fault condition can be selected to ensure that a downstream resource 390 detects a valid fault signal.

As mentioned, the signal processor 140 according to embodiments herein can include an output signal generator 375. The output signal generator 375 generates signal 376 based on the signal 312 or signal 322 produced by signal source 310 and the fault status indicator signal 368. In one embodiment, the output signal generator 375 varies or adjusts a magnitude of the signal 376 to generally track the signal 312 or signal 322 when there is no detected fault condition. As mentioned, output signal generator 375 transmits the signal 376 through a low pass filter 380 to a downstream resource 390.

During a time when the fault status indicator signal 368 indicates the detected fault condition for at least the predetermined amount of time X, the output signal generator 375 sets a magnitude of the output signal 376 to be within a fault band (e.g., voltage range such as between 0.96 * Vpwr and 1.0 * Vpwr) to indicate that error condition. In one embodiment, the output signal generator 375 discontinues setting the signal 376 to within the fault band range in lieu of setting the signal 376 to substantially track the signal 322.

In accordance with embodiments herein, the downstream resource 390 is ensured of being notified of the fault condition associated with the signal source 310 because output signal generator 375 sets the signal 376 inputted to the low pass filter to a fault band for at least the predetermined amount of time. In one embodiment, the downstream resource 390 samples the signal 386 at a high enough rate to detect occurrence of the error condition. Latching a magnitude of the signal 376 to a value above a threshold value such as 0.96 Vpwr for a threshold amount (e.g., minimum amount) of time ensures that the downstream resource 390 is guaranteed to detect the error condition.

In accordance with further embodiments, setting the magnitude of the signal 368 can include setting the magnitude of the signal 368 to be in the fault band for at least 4 times longer than a time constant of the low pass filter 380 to notify the downstream resource 390 of the detected fault condition.

In yet further embodiments, as mentioned above, the signal processor 140 can input the signal 312 or signal 322 produced by the signal source 310 (or a processed version of the received signal from a source such as a transducer) to the low pass filter 380. An output of the low pass filter 380 circuit can be configured to output a low pass filtered version of the signal to a downstream resource 390. Also, as mentioned above, the signal processor 140 can be configured to modify a magnitude of the signal 376 inputted to the low pass filter 380 circuit to be within a fault voltage range for at least the predetermined amount of time to ensure notification of the downstream resource of the detected fault condition. In other words, even though the actual error in the output voltage (e.g., signal 312) of the sensor (e.g., signal source 310) may occur for less than the predetermined amount of time, the system modifies the magnitude of the signal 376 inputted to the low pass filter 380 to be within the fault range for at least the predetermined amount of time so that a magnitude of the output signal 386 of the low pass filter 380 at least momentarily indicates that the fault condition occurred.

In accordance with yet further embodiments, note that signal processor 140 can include a fault detection circuit that applies a set of rules to determine whether a fault condition occurs. That is, in one embodiment, the signal processor 140 and/or fault status indicator circuit 330 applies a set of rules to verify integrity of the received signal. Other embodiments can include monitoring attributes of other signals (e.g., signals other than signal 312, signal 322, etc.) that may indicate a level of integrity associated with the received signal. Thereafter, assuming the signal verification fails indicating there is a fault condition, the system provides notification of the fault condition to a downstream resource.

In yet further embodiments, the signal processor 140 produces the signal 376 inputted to the low pass filter 380 by setting a magnitude of the output signal 386 to be substantially equal to a magnitude of a received signal such as signal 312, signal 322, etc., in the absence of detect the fault condition. As previously discussed, the magnitude of the received signal 312 can varying depending on an environmental condition detected by a respective sensor device that produces the signal being monitored. During the fault condition, the signal processor 140 adjusts the magnitude of the output signal 386 to be substantially different than the magnitude of the received signal at least for the predetermined amount of time to ensure notification of the fault condition through a filter to a downstream resource 390. As an example, the block 325 may detect a fault condition associated with signal 322 and then trigger the fault status register 365 to indicate the error. The monitored signal 322 may become healthy again before the timeout of the timer 345. However, the output signal generator 375 produces the signal 376 in the fault band to indicate the error condition even though the monitored signal may be healthy again in which the monitored signal 322 accurately represents current conditions. Under these conditions, the signal processor 140 adjusts the magnitude of the output signal 376 to be substantially different than the magnitude of the received signal 322 for at least a portion of the predetermined amount of time even though the fault condition associated with the received signal may terminate before expiration of the predetermined amount of time. In other words, during the predetermined amount of time or latching of a fault condition as indicated by fault status indicator circuit 330, technically, the fault condition may no longer exist. At such time, the output signal generator 375 of signal processor 140 continues to set the magnitude of the output signal 376 inputted to the low pass filter 380 to be in the fault range even though the received signal 322 is accurate again. Thus, the received signal 322 may indicate one magnitude while an output signal produced by the system may be of a different magnitude (i.e., within the fault band).

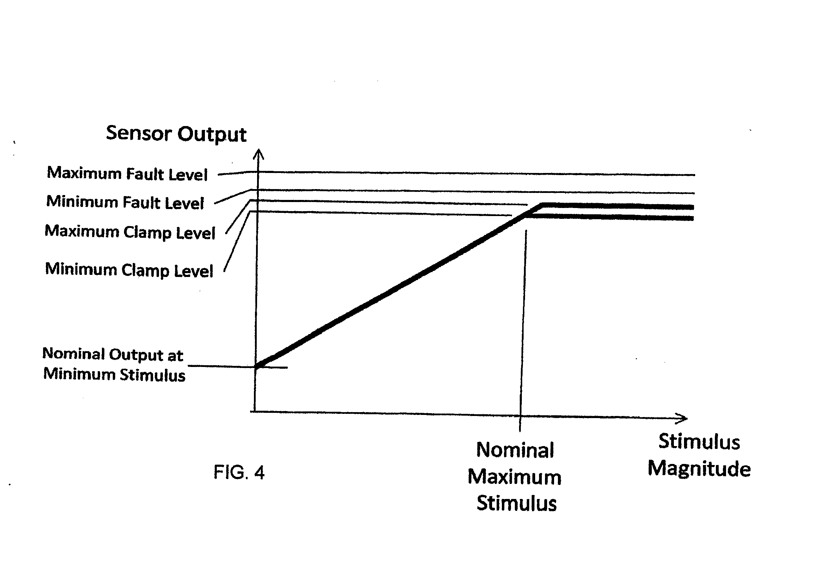

FIG. 4 is an example diagram illustrating a nominal output signal range of a senor device such as signal source 310 and an example of a fault band according to embodiments herein. As shown, the output voltage (e.g., 312) of the sensor device clamps at a magnitude between the minimum clamp level and the maximum clamp level above a nominal maximum stimulus. As previously discussed, when the sensor (e.g., signal source 310) detects a fault condition, the sensor produces the output voltage of sensor device to be within the range defined by the minimum fault level and the maximum fault level. In one embodiment, this range is defined as a voltage greater than the fault threshold (e.g., above 0.96 * Vpwr).

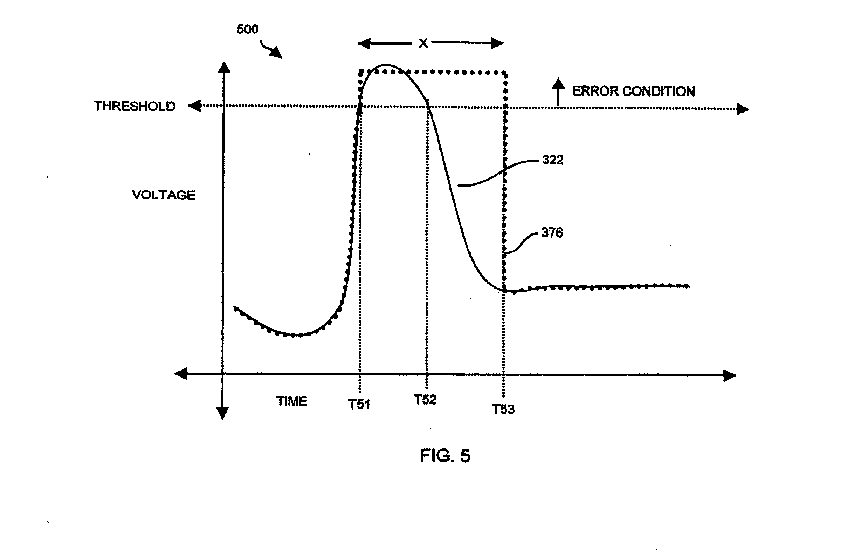

FIG. 5 is an example timing diagram illustrating latching a fault condition according to embodiments herein. In general, the output signal generator 375 produces signal 376 to track signal 312 up to time T51 and after time T53. As shown in diagram 500, an error or fault condition occurs at time T51 as the signal source 310 produces an output greater than a respective threshold. In response to occurrence of the error condition as discussed herein, the output signal generator 375 maintains the magnitude of the signal 376 above the threshold (to indicate the error condition) between time T51 and time T53. After time T53, because the signal 312 no longer satisfied the fault condition, and because the predetermined time has passed, the output signal generator 375 generates the signal 376 to be substantially equal to signal 312 again.

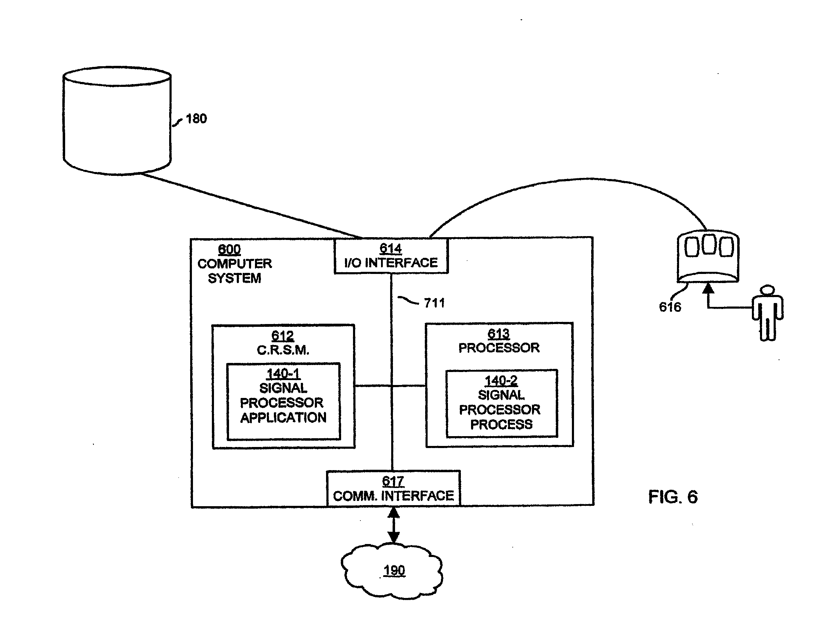

FIG. 6 is an example block diagram of a computer system 600 that provides computer processing according to embodiments herein. As mentioned, note again that any or all of the techniques as discussed herein can be implemented by a resource such as computer system 600, software, hardware, firmware, etc., as shown.

Note that the following discussion provides a basic embodiment indicating how to carry out functionality associated with signal processor system 140 as previously discussed. However, it should be noted that the actual configuration for carrying out the operations as described herein can vary depending on a respective application. Any or all portions of the signal processor 140 can be carried out via computer system 600 and corresponding resources.

As shown, computer system 600 of the present example includes an interconnect 611 that couples computer readable storage media 612 such as a non-transitory type of media, computer readable, hardware storage medium, etc., in which digital information can be stored and retrieved. Computer system 600 can further include a processor 613, I/O interface 614, and a communications interface 617.

I/O interface 614 provides connectivity to repository 180, and if present, display screen, peripheral devices 616 such as a keyboard, a computer mouse, etc.

Computer readable storage medium 612 (e.g., a hardware storage media) can be any suitable device and/or hardware such as memory, optical storage, hard drive, floppy disk, etc. The computer readable storage medium can be a non-transitory storage media to store instructions associated with signal processor application 140-1. The instructions are executed by a respective resource such as signal processor 140 to perform any of the operations as discussed herein.

Communications interface 617 enables computer system 600 to communicate over network 190 to retrieve information from remote sources and communicate with other computers, switches, clients, servers, etc. I/O interface 614 also enables processor 613 to retrieve or attempt retrieval of stored information from repository 180.

As shown, computer readable storage media 612 can be encoded with network application 140-1 executed by processor 613 as signal processor process 140-2.

In an example embodiment, note that computer system 600 also can be embodied to include a computer readable storage medium (e.g., a hardware, non-transitory media) for storing data and/or logic instructions. Computer system 600 can include a processor to execute such instructions and carry out network management operations as discussed herein. Accordingly, when executed, the code associated with signal processor application 140-1 can support processing functionality such as forwarding of data packets, processing of control plane packets, etc., as discussed herein.

During operation of one embodiment, processor 613 accesses computer readable storage media 612 via the use of interconnect 611 in order to launch, run, execute, interpret or otherwise perform the instructions of signal processor application 140-1 stored in computer readable storage medium 612. Execution of the signal processor application 140-1 produces processing functionality in processor 613. In other words, the signal processor process 140-2 associated with processor 613 represents one or more aspects of executing signal processor application 140-1 within or upon the processor 613 in the computer system 600.

Those skilled in the art will understand that the computer system 600 can include other processes and/or software and hardware components, such as an operating system that controls allocation and use of hardware processing resources to execute signal processor application 140-1.

In accordance with different embodiments, note that computer system may be any of various types of devices, including, but not limited to, a personal computer system, desktop computer, laptop, notebook, netbook computer, mainframe computer system, handheld computer, workstation, network computer, application server, storage device, a consumer electronics device such as a camera, camcorder, set top box, mobile device, video game console, handheld video game device, a peripheral device such as a switch, modem, router, or, in general, any type of computing or electronic device.

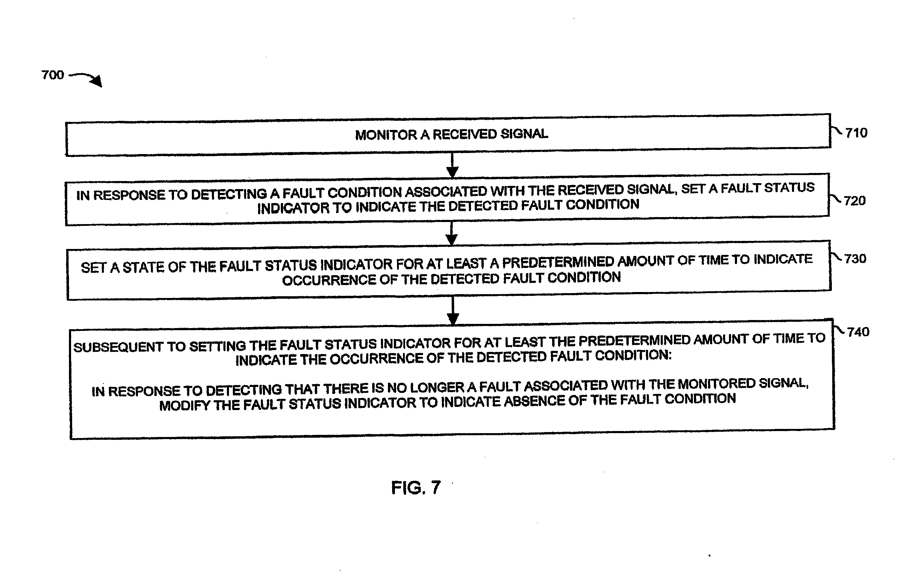

Functionality supported by components in signal processor 140 will now be discussed via flowcharts in FIGS. 7-8. As discussed above, the signal processor application 140-1 executed by a respective switch and/or other hardware can be configured to execute the steps in the flowcharts as discussed below.

Note that there will be some overlap with respect to concepts discussed above for FIGS. 1 through 6. Also, note that the steps in the flowcharts need not always be executed in the order shown. The steps can be executed in any suitable order.

FIG. 7 is a flowchart 700 illustrating a method of signal processing according to embodiments herein.

In step 710, the signal processor 140 monitors a signal from a sensor device.

In step 720, in response to detecting a fault condition associated with the received signal, the signal processor 140 sets a fault status indicator to indicate the detected fault condition.

In step 730, the signal processor 140 sets a state of the fault status indicator for at least a predetermined amount of time to indicate occurrence of the detected fault condition.

In step 740, subsequent to setting the fault status indicator for at least the predetermined amount of time to indicate the occurrence of the detected fault condition, the signal processor 140 continues to monitor the signal produced by the sensor device. In response to detecting that there is no longer a fault associated with the monitored signal, the signal processor 140 modifies the fault status indicator to indicate absence of the fault condition.

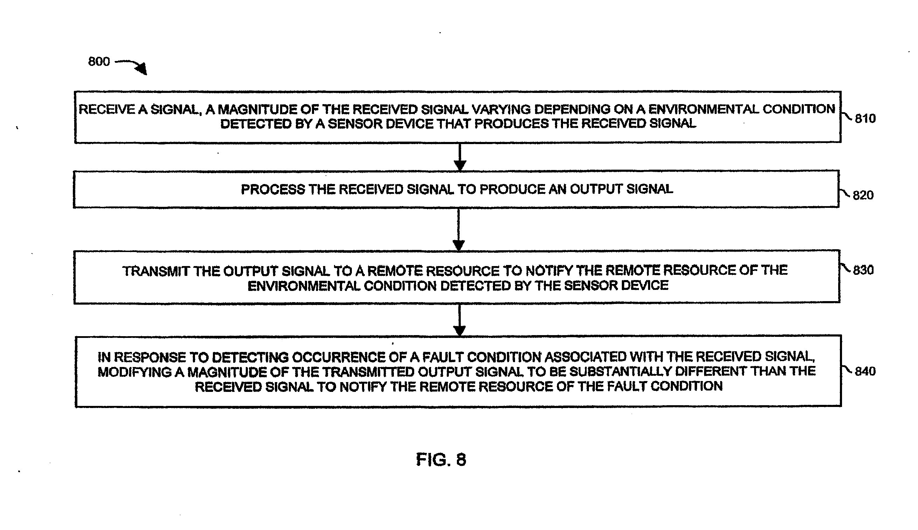

FIG. 8 is a flowchart 800 illustrating a method of signal processing according to embodiments herein.

In step 810, the signal processor 140 receives a signal from a sensor. A magnitude of the received signal varies depending on an environmental condition detected by a sensor device that produces the signal.

In step 820, the signal processor 140 processes the received signal to produce an output signal.

In step 830, the signal processor 140 transmits the output signal to a remote resource to notify the remote resource of the environmental condition detected by the sensor device.

In step 840, in response to detecting occurrence of a fault condition associated with the received signal, the signal processor 140 modifies a magnitude of the transmitted output signal to be substantially different than the received signal to notify the remote resource of the fault condition.

Note again that techniques herein are well suited for use in processing any of multiple different types of signals. However, it should be noted that embodiments herein are not limited to use in such applications and that the techniques discussed herein are well suited for other applications as well.

Based on the description set forth herein, numerous specific details have been set forth to provide a thorough understanding of claimed subject matter. However, it will be understood by those skilled in the art that claimed subject matter may be practiced without these specific details. In other instances, methods, apparatuses, systems, etc., that would be known by one of ordinary skill have not been described in detail so as not to obscure claimed subject matter. Some portions of the detailed description have been presented in terms of algorithms or symbolic representations of operations on data bits or binary digital signals stored within a computing system memory, such as a computer data storage such as memory. These algorithmic descriptions or representations are examples of techniques used by those of ordinary skill in the data processing arts to convey the substance of their work to others skilled in the art. An algorithm as described herein, and generally, is considered to be a self-consistent sequence of operations or similar processing leading to a desired result. In this context, operations or processing involve physical manipulation of physical quantities. Typically, although not necessarily, such quantities may take the form of electrical or magnetic signals capable of being stored, transferred, combined, compared or otherwise manipulated. It has proven convenient at times, principally for reasons of common usage, to refer to such signals as bits, data, values, elements, symbols, characters, terms, numbers, numerals or the like. It should be understood, however, that all of these and similar terms are to be associated with appropriate physical quantities and are merely convenient labels. Unless specifically stated otherwise, as apparent from the following discussion, it is appreciated that throughout this specification discussions utilizing terms such as "processing," "computing," "calculating," "determining" or the like refer to actions or processes of a computing platform, such as a computer or a similar electronic computing device, that manipulates or transforms data represented as physical electronic or magnetic quantities within memories, registers, or other information storage devices, transmission devices, or display devices of the computing platform.

While this invention has been particularly shown and described with references to preferred embodiments thereof, it will be understood by those skilled in the art that various changes in form and details may be made therein without departing from the spirit and scope of the present application as defined by the appended claims. Such variations are intended to be covered by the scope of this present application. As such, the foregoing description of embodiments of the present application is not intended to be limiting. Rather, any limitations to the invention are presented in the following claims.

## Claims

1. A method comprising:
monitoring a received signal;
in response to detecting a fault condition associated with the received signal, setting a fault status indicator to indicate the detected fault condition;
setting a state of the fault status indicator for at least a predetermined amount of time to indicate occurrence of the detected fault condition; and
subsequent to setting the fault status indicator for at least the predetermined amount of time to indicate the occurrence of the detected fault condition:
in response to detecting that there is no longer a fault associated with the received signal, modifying the fault status indicator to indicate absence of the fault condition.

2. The method as in claim 1, wherein the predetermined amount of time is greater than 4 times tau, wherein tau is a time constant of a low pass filter through which the fault status indicator passes.

3. The method as in claim 1 or claim 2 further comprising:
generating an output signal;
varying a magnitude of the output signal based on a magnitude of the received signal;
transmitting the output signal to a downstream resource through a low pass filter; and
during a time when the fault status indicator indicates the detected fault condition for at least the predetermined amount of time:
setting a magnitude of the output signal to be within a fault band.

4. The method as in claim 1 further comprising:
inputting the received signal to a low pass filter circuit, an output of the low pass filter circuit configured to output a low pass filtered version of the received signal to a downstream resource; and
modifying a magnitude of the signal inputted to the low pass filter circuit to be within a fault voltage range for at least the predetermined amount of time to ensure notification of the downstream resource of the detected fault condition.

5. The method as in claim 4, wherein a sensor device generates the received signal; and
wherein the fault voltage range falls outside a nominal voltage range outputted by the sensor device.

6. The method as in claim 1, wherein setting the fault status indicator to indicate the detected fault condition includes:
activating a timer to keep track of time;
maintaining the state of the fault status indicator to indicate the detected fault for at least the predetermined amount of time based on the time tracked by the timer.

7. The method as in claim 1, wherein monitoring the received signal further comprises:
applying a set of rules to verify the received signal; and
providing notification of the fault condition in response to detecting that the received signal violates at least one rule in the set of rules.

8. The method as in claim 1 further comprising:
producing, based on the received signal, an output signal to transmit to a low pass filter;
setting a magnitude of the output signal to be substantially equal to a magnitude of the received signal in the absence of the fault condition, the magnitude of the received signal varying depending on an environmental condition detected by a sensor device that produces the received signal; and
adjusting the magnitude of the output signal to be substantially different than the magnitude of the received signal at least for the predetermined amount of time even though the fault condition associated with the received signal terminates before expiration of the predetermined amount of time.

9. The method of claim 1 further comprising:
receiving a signal, a magnitude of the received signal varying depending on a environmental condition detected by a sensor device that produces the received signal;
processing the received signal to produce an output signal;
transmitting the output signal to a remote resource to notify the remote resource of the environmental condition detected by the sensor device; and
in response to detecting occurrence of a fault condition associated with the received signal, setting the fault status indicator by modifying a magnitude of the transmitted output signal to be substantially different than the received signal to notify the remote resource of the fault condition.

10. The method as in claim 9, wherein transmitting the output signal includes:
for a first time duration prior to occurrence of the fault condition:
setting the magnitude of the output signal to be substantially equal to a magnitude of the received signal;
transmitting the output signal to the remote resource to notify the remote resource of the environmental condition detected by the sensor device; and
wherein modifying the magnitude of the output signal includes:
for a second time duration, in response to detecting the fault condition:
setting the magnitude of the output signal to a value that is substantially different than the magnitude of the received signal.

11. The method as in claim 9, wherein modifying the magnitude of the output signal includes setting a magnitude of the output signal for greater than a threshold time value to enable detection of the failure condition by the remote resource.

12. The method as in claim 9, wherein modifying the magnitude of the output signal includes adjusting the magnitude of the output signal for more than a minimum time duration value and at least as long as the fault condition persists.

13. The method as in claim 9 further comprising:
subsequent to modifying the magnitude of the transmitted output signal to a level indicating the fault condition:
in response to detecting that the fault condition no longer exists in the control system, setting the magnitude of the transmitted output signal to be substantially equal to the received signal.

14. The method as in claim 9, wherein modifying the magnitude of the output signal includes adjusting the magnitude of the transmitted output signal to be substantially different than the magnitude of the received signal for a longer duration than during the occurrence of the fault condition.

15. A system comprising:
a processor circuit;
a storage unit that stores instructions associated with an application executed by the processor device; and
an interconnect coupling the processor and the storage unit, the processor circuit configured to execute the application and perform operations of:
monitoring a received signal;
in response to detecting a fault condition associated with the received signal, setting a fault status indicator to indicate the detected fault condition;
setting a state of the fault status indicator for at least a predetermined amount of time to indicate occurrence of the detected fault condition; and
subsequent to setting the fault status indicator for at least the predetermined amount of time to indicate the occurrence of the detected fault condition:
in response to detecting that there is no longer a fault associated with the monitored signal, modifying the fault status indicator to indicate absence of the fault condition.
